(19) Europäisches Patentamt
European Patent Office
Office européen des brevets

(11) Publication number: **0 061 241**
**B1**

# (12) EUROPEAN PATENT SPECIFICATION

(45) Date of publication of patent specification: **06.11.85**

(51) Int. Cl.$^4$: **C 07 F 15/00,** C 08 G 77/00, C 08 L 83/00

(21) Application number: **82300990.7**

(22) Date of filing: **25.02.82**

## (54) Platinum-, rhodium-, and iridium-nitrogen complex catalysts.

(30) Priority: **20.03.81 US 245927**
**20.03.81 US 246104**

(43) Date of publication of application:
**29.09.82 Bulletin 82/39**

(45) Publication of the grant of the patent:
**06.11.85 Bulletin 85/45**

(84) Designated Contracting States:
**DE FR GB IT NL**

(56) References cited:
**GB-A-2 019 426**

**JOURNAL OF THE AMERICAN CHEMICAL SOCIETY, vol. 99, no. 10, 11th May 1977, pages 3531-2; "Platinum (II)-catalyzed alcohol acetylations by N-acetylimidazole".**

**CHEMICAL ABSTRACTS, vol. 87, no. 14, 3rd October 1977, page 574, no. 110721q, Columbus Ohio (USA); S.P. GHOSH: "Complexes of some platinum metals with imidazole and benzimidazole".**

(73) Proprietor: **MINNESOTA MINING AND MANUFACTURING COMPANY**
**3M Center, P.O. Box 33427**
**St. Paul, MN 55133 (US)**

(72) Inventor: **Palensky, Frederick J.**
**2501, Hudson Road P.O. Box 33427**
**Saint Paul Minnesota 55133 (US)**
Inventor: **Siedle, Allen R.**
**2501, Hudson Road P.O. Box 33427**
**Saint Paul Minnesota 55133 (US)**

(74) Representative: **Baillie, Iain Cameron et al**
**c/o Ladas & Parry Isartorplatz 5**
**D-8000 München 2 (DE)**

(56) References cited:
**JOURNAL OF ORGANOMETALLIC CHEMISTRY, vol. 169, 1979, pages 97-105; A.L. BALCH et al.: "Bidentate amines as bridges between M(CO)2C1(M= Rh OR Ir) units".**

**CHEMICAL ABSTRACTS, vol. 95, no. 10, 7th September 1981, page 633, no. 90315v, Columbus Ohio (USA); BENAVACHE FADILA: "Structure and photoreactivity diazine/platinum dichloride/olefin complexes: a new bifunctional ligand: octahydrophenazine".**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 061 241 B1

**Description**

## Technical Field

This invention relates to platinum, rhodium, and iridium complex compounds and to their preparation. In another aspect, it relates to a process for hyddrosilation using as catalysts platinum, rhodium, or iridium complex compounds. Compositions cured by hydrosilation reactions are useful in molding applications.

## Background Art

In the presence of catalysts, curable organosilicone compositions undergo hydrosilation, a reaction involving the addition of a silicon-hydrogen bond across a pair of aliphatic carbon atoms linked by multiple bonds. Reactions of this type are catalyzed by metals, most notably platinum (Pt), rhodium (Rh), iridium (Ir), and palladium (Pd), and compounds thereof. Hydrosilation has found widespread use in the production of silicone materials and organosilanes.

Platinum-containing hydrosilation catalysts are known in the art and have been described in numerous patents, such as U.K. Patent Application GB 2,019,426 A, German Patent No. 1,165,028, and U.S. Patent Nos. 2,823,218, 3,814,730, 3,715,334, 3,516,946, 3,474,123, 3,419,593, 3,220,972, 3,188,299, 3,178,464, and 3,159,601. These catalysts often suffer from a number of disadvantages: they may be subject to "poisoning" in the presence of certain common materials; they may lack sufficient solubility or dispersibility in organic reaction media; they may be inefficient in promoting a reaction; and in their presence, addition curable organosilicone compositions may lack stability and not exhibit satisfactory pot life.

U.S. Patent No. 3,188,299 discloses nitrogen-containing compounds which are used with a platinum containing catalyst to reduce or temporarily inhibit its activity in the presence of an alkenyl polysiloxane and hydrogen polysoloxane. Although this patent discloses pyrazine as a useful ligand, the proportion of ligand to platinum catalyst used is considerably greater than Applicants' and thereby gives an entirely different product.

Other patents teaching nitrogen- and platinum- containing hydrosilation catalysts are U.K. Patent Application GB 2,019,426 A and Germany Patent No. 1,165,028. The latter discloses trans-(pyridine)-(ethylene)$PtCl_2$ as an effective hydrosilation catalyst. U.K. Patent Application GB 2,019,426 A teaches a process for the addition of a silicon-bonded hydrogen atom to an aliphatic multiple bond, which comprises carrying out the addition in the presence of a catalyst which comprises at least one halogen-platinum complex selected from those of the general formulae $A_2PtX_2$ and $C_3H_6PtB_2X_2$, in which formulae each A denotes a pyridine ring that is substituted by 1 or 2 alkyl radicals having 1 to 3 carbon atoms, and each X denotes a halogen atom, and each B denotes a 5- or 6-member unsubstituted or substituted heterocyclic ring having 1 or 2 hetero atoms or $B_2$ denotes two such rings joined together. Neither of these patents discloses a platinum catalyst that has the polynitrogen-containing single or fused ring structure which Applicants have discovered is important in providing increased stability and longer pot life to addition curable organosilicone compositions.

Compared with platinum, relatively little work has been done on rhodium- and iridium-containing hydrosilation catalysts. Various chloro-rhodium compounds, wherein the valence of rhodium (Rh) is 1, particularly $[RhCl(CO)_2]_2$ and $RhCl(CO)[P(C_6H_5)_3]_2$ (A. J. Chalk, J. Organometal. Chem. *21*, 207—213 (1970)), $[RhCl(C_2H_4)_2]_2$ (U.S. Patent No. 3,296,291), and $RhCl[P(C_6H_5)_3]_3$ (U.S. Patent No. 3,546,266), are disclosed in the literature to be hydrosilation catalysts. *Journal of the American Chemical Society, 99* (10), pages 3531—3532 (May 11, 1977) discloses certain imidazole-containing platinum complexes which are transient species in a reaction which transfers an acetyl group to a pyridine-containing alcohol. *Journal of Organometallic Chemistry, 169* pages 97—105 (1979) discloses certain rhodium and iridium carbonyl complexes containing pyridazine, naphthyridine, or pyrazine ligands; no use is specified. R. N. Haszeldine, R. V. Parish and D. J. Perry, J. Chem. Soc. (A), 683 (1969), found that $[(C_6H_5)_3P]_2Rh(CO)Cl$ was active as a hydrosilation catalyst but that the iridium analogue was inactive.

## Summary of the Invention

Briefly, in one aspect of the invention, there are provided novel platinum-, rhodium-, and iridium-nitrogen complexes useful as hydrosilation catalysts. In another aspect of the invention, there is provided a process for hydrosilation utilizing a platinum-, rodium-, or iridium-nitrogen complex catalyst, said catalyst being a monometallic, bimetallic, or ionic complex, or reduced forms of the monometallic complex, said process comprising mixing an organosilicone composition, which can be an addition curable composition, with a catalytically effective amount of the platinum-, rhodium-, or iridium-nitrogen complex catalyst, optionally heating the resulting mixture to accelerate its reaction rate, and recovering the resulting organosilane or polysiloxane product.

A further aspect of this invention relates to the method of preparing platinum-, rhodium, and iridium-nitrogen containing complex hydrosilation catalysts.

"Monometallic" refers to a complex having only one platinum, rhodium, or iridium atom per molecule.

"Bimetallic" refers to a complex having two platinum or rhodium atoms per molecule.

"Ionic" refers to a complex of a monometallic molecule and HCl, HBr, or the silver salt of

trifluoromethanesulfonate, which complex dissociates to give positively and negatively charged moieties in certain solvents, e.g., nitromethane and acetonitrile.

"Reduced monometallic forms" refers to forms of monometallic complexes wherein an electron or a hydrogen atom is added to the nitrogen-containing ligand, to be discussed below in detail.

"Addition curing" refers to a hydrosilation reaction in which compounds having more than one pair of aliphatic carbon atoms linked by multiple bonds and compounds having more than one silicon-hydrogen bond react together to form a crosslinked polymer.

"Pot life" is the time during which the composition containing the curable organosilicone components and the catalyst remains sufficiently fluid to be easily coatable, extrudable, or otherwise processed.

The catalysts of this invention have increased stability, increased dispersibility in reaction media, give lower activation temperatures, are more active catalysts, provide compositions having longer pot life, and are less susceptible to poisoning, as compared to platinum-containing hydrosilation catalysts known in the art.

Detailed Description

The hydrosilation catalysts of the present invention are of the following types or classes:

(a) monometallic complexes: $(L)PtX_2(Y)$, $(L)RhX(W)_2$, and $(L)IrX(W)_2$,

(b) bimetallic complexes: $(L)(PtX_2)_2(Y)_2$ and $(L)[RhX(CO)_2]_2$,

(c) ionic complexes, $(L)PtX_2(Y)(Z)$, and

(d) reduced forms of monometallic complexes having the formulae:

(1) $H[(PNZ)PtX_2(Q)]_2$,

(2) $[(PNZ)PtX_2(Q)]_2$—, and

(3) $[H(PNZ)PtCl_2(C_2H_4)]_3PtCl_3$

wherein

L is a single ring or fused 2-, 3-, or 4-ring heterocyclic ligand comprising at least one 5- or 6-member ring, said ligand having only 2 to 4 nitrogen ring atoms. in the same ring, at least one of which nitrogen atoms is bonded to a platinum, rhodium, or iridium atom, with the proviso that when two nitrogen atoms are in the same 6-member ring, each nitrogen atom is bonded to two ring carbon atoms or phenazine N-oxide,

Y is an uncharged monodentate ligand that fills only one coordination position of the platinum atom and is selected from (1) olefins, which are unsubstituted or substituted by aryl groups, (2) triphenylphosphines or triphenylarsines, (3) diethyl sulfide, and (4) carbon monoxide, the ligand having up to 25 carbon atoms.

W is an uncharged ligand that fills one or two coordination positions of the metal atom, and is selected from a mono- or di-olefin or aryl substituted mono- or di-olefin, said olefin having up to 25 carbon atoms, and CO,

X is independently Cl, Br, I, CN, or SCN,

Z is HCl, HBr, or silver trifluoromethanesulfonate,

Q is an olefin ligand of 2 to 25 carbon atoms, and

PNZ is phenazine.

Y, an uncharged monodenate ligand, coordinates to the central platinum atom in the complex and occupies one coordination position. It is an olefin such as ethylene, propylene, butylene or styrene, or it may be a group such as a triphenylphosphine, a triphenylarsine, CO, or $(C_2H_5)_2S$.

W, an uncharged ligand, coordinates to the central metal atom in the complex and occupies one coordination position when W is CO or a mono-olefin, such as ethylene, propylene, butylene, or styrene; or it may occupy two coordination positions when W is a di-olefin such as 1,5-cyclooctadiene (COD), 1,4-cyclohexadiene (CHD), or bicyclo[2.2.1]heptadiene, or argl substituted derivatives of the di-olefins.

The single or fused ring heterocyclic ligand, L, which preferably is a cyclic structure containing two nitrogen ring atoms in the same ring, which structure can have one, or two or three fused rings. The nitrogen atoms in the same ring may be in any positions; so long as when two nitrogen atoms are in the same 6-member ring, each nitrogen atom is bonded to two ring carbon atoms. The two-fused ring cyclic ring may be

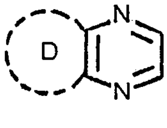 , I

where the encircled letter D denotes a 6-member carbocyclic aromatic or heterocyclic aromatic ring fused with the depicted dinitrogen heterocycle. Quinoxaline, is the preferred species. In the three-fused ring systems,

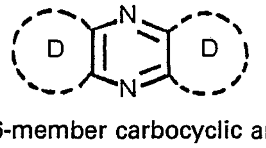 , II

the encircled letters D each denote a 6-member carbocyclic aromatic or heterocyclic aromatic ring fused with the depicted dinitrogen heterocycle. Phenazine in this instance is the preferred species; phenazine

oxide is also useful. Other useful ligands, of the single ring type, in addition to pyrazine, are five-membered ring structures imidazole and 1,2,4-triazole. The polynitrogen-containing single or polynuclear fused ring structure is important in providing increased stability and longer pot life to these novel catalysts when compared to prior art hydrosilation catalysts.

General preparatrive methods of the novel catalysts described above will now be described.

Monometallic catalysts of the type $(L)PtX_2(Q)$, wherein L, X, and Q are as defined above, are prepared by combining a polynitrogen ligand L and $KPtX_3(Q)$ in a 1:1 mole ratio in water or a polar organic solvent, such as methanol or acetonitrile. The latter is preferred. $KPtX_3(Q)$ is prepared by methods known in the art (see A. Wold and J. Ruff, Eds., "Inorganic Synthesis", *14*, 90, published 1973 by McGraw Hill) and the polynitrogen-containing single or fused ring substances (referred to herein as L) are commercially available. The complex salts precipitate from the reaction mixture. These olefin complexes may be subsequently converted to other novel catalytically active compositions by displacement of the olefin. For example, $(L)PtX_2(Y)$ and $(L)(PtX_2)_2(Y)_2$, wherein L and X are as defined above and Y is a neutral ligand selected from diethyl sulfide, carbon monoxide, triphenylphosphine, triphenylarsine, and styrene, can be prepared by displacement of the olefin. Preferably the olefin has the formula $R_2C{=}CR_2$, wherein each R is independently H, an alkyl group of up to 20 carbon atoms, or an aryl group having up to 10 ring carbon atoms, with the proviso that not more than two R groups are aryl. Typically, $(L)PtX_2(Q)$ and the ligand Y are combined in a 1:1 molar ratio in an aprotic organic solvent such as benzene, chloroform, or acetonitrile and then heated at the reflux temperature. If CO is to be incorporated, it is used in excess because it is a gas. The $(L)(PtX_2)(Y)$ compound is isolated by evaporation of the filtered reaction mixture.

Monometallic catalysts of the type $(L)RhX(W)_2$ and $(L)IrX(W)_2$, wherein L, W, and X are as defined above, are prepared by combining L, the polynitrogen ligand, and the dimer of the type $[MW_2X]_2$ in a 2:1 mole ratio in an organic solvent, such as benzene, toluene, methanol, acetonitrile, methylene chloride, or chloroform. The preferred solvent is methylene chloride. The complex salts are recovered from the reaction mixture. Starting materials $[M(olefin)_2X]_2$, wherein M and X are as defined above, and $[Rh(CO)_2Cl]_2$ are commercially available. Useful polynitrogen-containing single or fused ring substances, L, are available from Aldrich Chemical Co. Preferably the olefin has the structure $R_2C{=}CR_2$, wherein each R is independently H, an alkyl group of up to 20 carbon atoms, or an aryl group having up to 10, and preferably 6 ring carbon atoms, with the proviso that not more than one R group on each carbon atom is aryl. The preferred olefinic ligand is COD.

Because Y contains more than 1 donor nitrogen atom, additional novel catalytically active bimetallic complexes of the formula $(L)(PtX_2)_2(Y)_2$ can be prepared in which at least two nitrogeen atoms in the heterocyclic moiety are linked to platinum atoms. These complexes of the formula $(L)(PtX_2)_2(Y)_2$ are formed as coproducts with complexes of the formula $(L)PtX_2(Y)$, wherein L, X, and Y are as defined above, in the displacement reactions. They have low solubility in the reaction mixture and are easily isolated by filtration.

Because L contains more than 1 donor nitrogen atom, additional novel catalytically active bimetallic compounds of the formula $L[RhX(CO)_2]_2$ can be prepared, in which at least two ring nitrogen atoms in the heterocyclic ligand are linked to rhodium atoms. These compounds of the formula $L[RhXCO)_2]_2$ are formed by combining L and $[Rh(CO)_2X]_2$ in a 1:1 molar ratio, wherein L and X are as defined above. They are removed from the reaction mixture and are easily isolated by filtration.

Ionic complex salts formed from complexes of the formula $(L)PtX_2(Y)$ are prepared by combining the platinum compound and a protic acid (e.g., HBr or HCl) or a salt (e.g., $AgCF_3SO_3$) in a nonpolar organic solvent such as dichloromethane, benzene, or hexane, to yield complexes of the formula $(L)PtX_2(Y)(Z)$ in which L, X, and Y are as defined above and Z is HBr, HCl, or $AgCF_3SO_3$.

Included also in the novel class of hydrosilation catalysts are the reduced forms of the monometallic complexes, wherein PNZ represents phenazine, and X and Q are as defined above. The reduction of the monometallic complexes of the invention leads to platinum complexes having enhanced reactivity and the reduction can be accomplished by electrolysis or by reaction with hydrogen, alkali metals, or silanes, as will be discussed below. These complexes and radicals have the formulae $H[(PNZ)PtX_2(Q)]_2$, $[(PNZ)PtX_2(Q)]_2$—, and $[H(PNZ)PtCl_2(C_2H_4)]_3PtCl_3$, wherein PNZ, X, and Q are as defined above. By reduced form is meant addition of an electron or hydrogen atom to yield an oligomerized product of, for example, (phenazine)$PtCl_2$(ethylene). The dimeric $H[(PNZ)PtCl_2(C_2H_4)]_2$, so produced is useful as a hydrosilation catalyst and it is a more reactive catalyst than the precursor, $(PNZ)PtCl_2(C_2H_4)$. Specifically, reduction of the monometallic phenazine platinum complexes to form $H[(PNZ)PtX_2(Q)]_2$ can be accomplished by using hydrogen in the presence of a platinum catalyst such as $PtCl_2[(C_2H_5)_2S]_2$ or, preferably, platinum black, in an aprotic solvent such as toluene or preferably, dichloromethane, according to the following chemical equation:

$$(PNZ)PtCl_2(C_2H_4) \xrightarrow[\text{Pt catalyst}]{H_2} H[(PNZ)PtCl_2(C_2H_4)]_2$$

Reduction of $(PNZ)PtX_2(Q)$ complexes is also accomplished by electrolysis in a polar organic solvent such as acetonitrile or dichloromethane and in the presence of a supporting electrolyte, such as tetra-n-butylammonium fluoroborate, until approximately 0.5 Faradays per mole of Pt have been consumed. Alternatively, reduction can be carried out using an alkali metal amalgam or an alkali metal with or without

a carrier, such as naphthalene, being present. Solvents used in metal reductions are ethers, such as tetrahydrofuran or 1,2-dimethoxyethane. The molar ratio of alkali metal to platinum complex is 0.5 to 1 with further reduction leading to decomposition. For the $(PNZ)PtCl_2(C_2H_4)$ complex, the three alternative reactions that take plae are as follows:

$$(PNZ)PtX_2(C_2H_4) \rightarrow [(PNZ)PtCl_2(C_2H_4)]_2\text{—}$$

(1) electrolysis, or
(2) alkali metal amalgam, or
(3) alkali metal

Reduction of $(PNZ)PtX_2(C_2H_4)$ to form the catalyst $[H(phenazine)PtCl_2(C_2H_4)]_3PtCl_3$ occurs in chloroform. Suitable reductants include trialkyl-, triaryl- or trialkoxysilanes of the type $R'_{(4-n)}SiH_n$, wherein n is an integer of 1 to 3, R' is an alkyl group having up to 10 carbon atoms, an alkoxy group having up to 4 carbon atoms, phenyl, or diphenyl. Preferred silicon-containing reductants are $(C_6H_5)_3SiH$ or $(CH_3O)_3SiH$. The reactions that take place may be written as follows:

$$(PNZ)PtX_2(C_2H_4) \xrightarrow[CHCl_3]{R'_{(4-n)}SiH_n} [H(PNZ)PtX_2(C_2H_4)]_3PtCl_3$$

The proportion of complex present in the organosilicone compositions of the present invention can vary widely, but generally an amount sufficient to provide 1 to 1000 ppm by weight of platinum, rhodium, or iridium to the weight of the coreactants is useful.

Addition cure or hydrosilation reactions produce organosilanes and polysiloxanes. The catalyst-containing organosilicone compositions of the present invention are formable materials ranging from thin pastes to stiff plastic, dough-like substances. They may be shaped, as by molding or extruding, after which the silicone article is converted to a rubbery state by curing. The rubbery fabricated articles formed thereby may be, for example, O-rings, gaskets, and tubing.

Objects and advantages of this invention are further illustrated by the following examples, but the particular materials and amounts thereof recited in these examples, as well as other conditions and details, should not be construed to unduly limit this invention.

## Example 1

Synthesis of the Complex Platinum-Nitrogen Catalysts

A. $(Phenazine)PtCl_2(C_2H_4)$

Phenazine, 3.3 mmole (0.60 g), in 20 ml hot acetonitrile was added to a solution of 3.3 mmole (1.28 g) $KPtCl_3(C_2H_4)$ in 20 ml of the same solvent. The resulting turbid solution was allowed to stand at room temperature for 24 hours. The solids which separated were collected on a filter and recrystallized by slow evaporation of dichloromethane-ethanol solution to give 0.58 g of product as yellow needles. The original mother liquor was evaporated and the residue similarly recrystallized to give 0.32 g. of additional product. The total yield was 0.90 g (59%). Spectroscopic analysis confirmed the product as $(phenazine)PtCl_2(C_2H_4)$. The infrared spectrum exhibited a single Pt-Cl stretching band indicative of trans stereochemistry. The analogous pyrazine and quinoxaline platinum-nitrogen complexes were prepared in a similar manner. Also, $(phenazine)PtCl_2(C_3H_6)$ can be prepared using $KPtCl_3(C_3H_6)$.

Using the same general method described above, the following complex catalysts were synthesized and their compositions were confirmed by elemental analysis.

TABLE I

| Complex |
|---|
| 1. $(pyrazine)PtCl_2(C_2H_4)$ |
| 2. $(quinoxaline)PtCl_2(C_2H_4)$ |
| 3. $(phenazine)PtCl_2P(C_6H_5)_3$ |
| 4. $(phenazine)PtCl_2(C_6H_5CH{=}CH_2)$ |
| 5. $(phenazine\text{-}N\text{-}oxide)PtCl_2(C_2H_4)$ |
| 6. $(phenazine)[PtCl_2(styrene)]_2$ |
| 7. $[2,3,5,6\text{-}(CH_3)_4pyrazine]PtCl_2(C_2H_4)$ |
| 8. $(phenazine)PtCl_2(C_2H_4)\cdot AgCF_3SO_3$ |
| 9. $(phenazine)PtCl_2[S(C_2H_5)_2]$ |
| 10. $(phenazine)PtCl_2(C_2H_4)\cdot HCl$ |
| 11. $(phenazine)PtCl_2As(C_6H_5)_3$ |
| 12. $(phenazine)[PtCl_2As(C_6H_5)_3]_2$ |
| 13. $(phenazine)[PtCl_2P(C_6H_5)_3]_2$ |

B. (Phenazine($PtCL_2(C_2H_4)\cdot CF_3SO_3Ag$

(Phenazine)$PtCl_2(C_2H_4)$, 1.0 mmole (0.47 g), in 30 ml hot benzene was added to a solution of 1.0 mmole (0.246 g) silver trifluoromethanesulfonate in 6 ml of the same solvent. After 15 minutes, the yellow product was collected on a filter, washed with benzene and vacuum dried. The yield was 0.57 g. Conductivity studies and spectroscopic analysis indicated the formation of (phenazine)$PtCl_2(C_2H_4)\cdot CF_3SO_3Ag$.

C. (Phenazine)$PtCl_2(C_2H_4)\cdot HCl$

A stream of anhydrous hydrogen chloride was passed through a solution of 0.5 g (phenazine)$PtCl_2(C_2H_4)$ in dichloromethane. The reaction mixture was filtered and the filtrate saved. The solids were recrystallized by slow evaporation of a dichloromethane-ethanol solution to give 0.1 g of product. The above filtrate was treated with heptane and concentrated to give solids which were similarly recrystallized to give 0.15 g additional product. Spectroscopic and elemental analysis were the same for the two crops and confirmed the identity of the compound to be compound 10 in TABLE I.

D. (Heterocyclic amine)$PtCl_2(CO)$ complexes

Approximately 0.05 g quantities of (amine)$PtCl_2(C_2H_4)$, where the amines are listed below in TABLE II, were placed in vials which were sealed with rubber septa. The vials were thoroughly flushed with nitrogen, then about 1 ml deoxygenated dichloromethane was introduced via syringe. Carbon monoxide was slowly passed through the solutions to effect olefin displacement and formation of the carbonyl complex; this was usually accompanied by a decrease in the intensity of the yellow color. Samples were withdrawn by syringe and spectroscopic analysis showed the presence of the corresponding (heterocyclic amine)$PtCl_2(CO)$; e.g., where pyrazine was used, the resulting complex was (pyrazine)$PtCl_2(CO)$.

TABLE II

| |
|---|
| pyrazine |
| quinoxaline |
| phenazine |
| phenazine N-oxide |
| 2,6-dimethylpyrazine |
| 2,3,5,6-tetramethylpyrazine |

E. (Phenazine)$PtCl_2P(C_6H_5)_3$ and (phenazine) $[PtCl_2P(C_6H_5)_3]_2$

Triphenylphosphine (0.5 mmole, 0.13 g) and 0.24 g (0.5 mmole) (phenazine)$PtCl_2(C_2H_4)$ in 10 ml acetonitrile were refluxed and stirred overnight. The bimetallic catalyst (phenazine)$[PtCl_2P(C_6H_5)_3]_2$ precipitated from the hot reaction mixture and was isolated by filtration. The yield was 0.1 g. The monometallic catalyst (PNZ)$PtCl_2P(C_6H_5)_3$ remained dissolved in the filtrate which was concentrated and cooled to give, upon recrystallization from acetonitrile, 0.18 g of (PNZ)$PtCl_2P(C_6H_5)_3$ as yellow plates. Spectroscopic analysis confirmed the identity of the products.

The styrene and triphenylarsine analogues were prepared in a similar manner. Spectroscopic analysis (see compounds 4, 6, 11, and 12 of TABLE I above) confirmed the identity of these products.

F. (Imidazole)$PtCl_2(C_2H_4)$ and (1,2,4-triazole)$PtCl_2(C_2H_4)$

To a solution of 0.37 g (1 mmole) $KPtCl_3(C_2H_4)$ in 15 ml water was added with stirring 0.068 g (1 mmole) imidazole, dissolved in 3 ml water. The desired (imidazole)$PtCl_2(C_2H_4)$ separated as a yellow microcrystalline solid and was collected on a filter, washed with water and vacuum dried. The yield was 0.26 g, m.p. 119 8120°. Elemental analysis confirmed the product to be (imidazole)$PtCl_2(C_2H_4)$. (Imidazole)$PtCl_2(C_3H_6)$ can be prepared from $KPtCl_3(C_3H_6)$ using this method.

A similar synthesis of (1,2,4-triazole)$PtCl_2(C_2H_4)$ using 1,2,4-triazole was carried out. The yield was 0.18 g (50%). This compound did not melt and underwent only slight darkening on heating to 320°C. Elemental analysis confirmed the product to be (1,2,4-triazole)$PtCl_2(C_2H_4)$.

G. (Phenazine)$RhCl(C_8H_{12})$

To 1,25 g (2.5 mmole) $[RhCl(COD)]_2$ in 30 ml. acetonitrile was added 0.90 g (5.0 mmole) phenazine in a minimum amount of warm acetonitrile. Needle crystals began to separate from the orange solution and, after 0.5 hr., they were collected on a filter, washed with fresh solvent and vacuum dried. The yield was 1.6 g (75%). Spectroscopic and elemental analyses confirmed the crystalline material to be (phenazine)$RhCl(C_8H_{12})$.

Using the method just described, (phenazine)RhBr-$(C_8H_{12})$ and (phenazine-N-oxide)$RhCl(C_8H_{12})$ were prepared using $[RhBr(COD)]_2$ or phenazine-N-oxide as starting materials. Spectroscopic and elemental analysis confirmed the identity of these compounds.

H. (Quinoxaline)$RhCl(C_8H_{12})$

Quinoxaline, 1.66 mmole in 2 ml. acetonitrile, was added to a solution of 0.41 g. (0.83 mmole) $[RhCl(COD)]_2$ in 20 ml. of the same solvent. The mixture was evaporated to 2 ml. with a nitrogen jet. The

remaining solution was heated to boiling and filtered. On cooling, the product separated as yellow nodules. It was filtered and vacuum dried; yield 0.2 g. (32%). Spectroscopic and elemental analysis confirmed the identity of the product to be (Quinoxaline)RhCl($C_8H_{12}$).

I. (Phenazine)IrCl($C_8H_{12}$)

Cyclooctadiene iridium(I) chloride dimer was prepared from hydrated $IrCl_3$ by the method disclosed in "Organometallic Synthesis", *1*, R. Bruce King, Academic Press, N.Y., 1965, p. 132. A 0.95 g. sample of this crude dimer was dissolved in 25 ml. methylene chloride and the solution filtered. Phenazine, 0.51 g. (2.8 mmole) was added. The resulting orange solution was evaporated to a small volume under reduced pressure and diluted with ethanol. On cooling to −20°C, 0.8 g. of red-brown solid separated. This was recrystallized from hot acetonitrile to give 0.20 g. of the iridium complex as dark brown needles. Spectroscopic and elemental analyses confirmed the identity of the product to be (phenazine)IrCl($C_8H_{12}$).

J. (Phenazine)RhCl$(CO)_2$

A solution of 09.36 g. (2 mmole) phenazine in 10 ml. benzene was added dropwise to 0.4 g. (1 mmole) resublimed $[RhCl(CO)_2]_2$ in 35 ml. benzene. The resulting orange solution was evaporated in 3 ml. under reduced pressure and diluted with hexane to give 0.60 g. (80%) of product as yellow needles. Spectroscopic and elemental analysis confirmed the identity of the product to be (phenazine)RhCl$(CO)_2$. The infrared spectrum contained two Rh-carbonyl stretching bands indicative of cis stereochemistry.

Using the method just described, (phenazine-N-oxide)RhCl$(CO)_2$ was prepared utilizing phenazine-N-oxide in place of phenazine and its identity was confirmed by spectroscopic and elemental analyses.

K. (Phenazine)$[RhCl(CO)_2]_2$

This bimetallic compound was prepared using the method of EXAMPLE J and half the amount of phenazine. The yield of orange, crystalline material was 0.45 g. (79%). Spectroscopic and elemental analysis confirmed the identity of the product to be (phenazine)$[RhCl(CO)_2]_2$.

L. (Imidazole)RhCl$(CO)_2$

A solution of 0.19 g (0.5 mmole) $[Rh(CO)_2Cl]_2$ in 10 ml chloroform was added to 0.069 g (1 mmole) imidazole in 3 ml of the same solvent. The yellow solution was diluted to the cloud point with heptane and then concentrated without heating on the rotary evaporator. Yellow crystals of (imidazole)RhCl$(CO)_2$ separated and were collected on a filter and vacuum dried. The yield was 0.20 g, m.p. 77—80°C. Elemental analysis confirmed the identity of the product to be (imidazole)RhCl$(CO)_2$. The infrared spectrum contained two Rh-carbony stretching bands indicative of cis stereochemistry.

Orange crystals of (1,2,4-triazole)RhCl$(CO)_2$ (m.p. decomposes) were prepared by a similar method using 1,3,4-triazine in place of imidazole. Spectroscopic and elemental analyses identified this product.

M. (Phenazine)IrCl$(CO)_2$

A mixture of 0.31 g (1 mmole) of polymeric $[IrCl(CO)_3]$, and 0.18 g (1 mmole) of phenazine in 25 ml acetonitrile was stirred under reflux for 16 hr, then filtered. The filtrate was diluted to the cloud point with hexane and then cooled to −20°. The yellow crystals which separated were collected on a filter. Unreacted phenazine was removed from this crude product by heating the material in a sublimer (80°C, $3 \times 10^{-3}$ mm.) fitted with a dry ice cooled probe. The yield of pure, yellow crystalline product was 0.075 g, m.p. 195°C. Spectroscopic and elemental analysis indicated the product to be (phenazine)IrCl$(CO)_2$. The infrared spectrum contained two Ir-carbonyl stretching bands indicative of cis stereochemistry.

## EXAMPLE 2

Reduction of Complex Platinum-Nitrogen Catalysts

A. Reduction of (penazine)$PtCl_2(C_2H_4)$ with hydrogen

A solution of 0.40 g of (phenazine)$PtCl_2(C_2H_4)$ in 20 ml dichloromethane was prepared under nitrogen. Platinum black (5 mg) was added and a slow stream of hydrogen passed over the stirred reaction mixture for 3.5 hours. Filtration afforded 0.26 g of product as a dark green solid which was washed with dichloromethane, dried by pumping and stored under vacuum. Spectroscopic and elemental analysis confirmed the identity of the product to be H[(phenazine)$PtCl_2(C_2H_4)]_2$.

B. Electrochemical reduction of (phenazine)$PtCl_2(C_2H_4)$

Electrochemical measurements in this example were made using the conventional three electrode technique. A water jacketed cell maintained at 4°C held the sample which was dissolved in 0.1 M tetrabutylammonium fluoroborate in dichloromethane. Nitrogen presaturated with solvent was used to deoxygenate the solutions.

Reduction of (phenazine)$PtCl_2(C_2H_4)$ was carried out at −0.9 V (relative to a saturated calomel reference electrode) until the current had declined to 4% of the initial value at which point 0.49 Faradays per mole of platinum had been passed. Aliquots of the deep green solution were transferred with a syringe to nitrogen

filled EPR tubes or to a rectangular cuvette for electronic spectroscopy. Spectroscopic analysis confirmed the identity of $[(\text{phenazine})PtCl_2(C_2H_4)]_2$—. The cation was tetrabutylammonium ion.

C. Reduction of $(\text{phenazine})PtCl_2(C_2H_4)$ with sodium metal

Five milliliters of degassed acetonitrile (dried with 5A molecular sieves) were condensed onto 0.047 g $(\text{phenazine})PtCl_2(C_2H_4)$ and 0.26 g of 0.44% sodium amalgam. After shaking for about five minutes, the green solution was filtered through a coarse frit into an EPR tube. A sample for electronic spectroscopy was similarly prepared. The epr and visible spectrum confirmed the identity of $[(PNZ)PtCl_2(C_2H_4)]_2$—. The product matched that of the material prepared electrochemically, in EXAMPLE 2B, except that the cation was sodium ion.

Similar reductions were carried out using sodium amalgam in dimethoxyethane or sodium naphthalide in tetrahydrofuran with similar results. When these reactions were carried out for a prolonged period, the green color was replaced by the red phenazine anion radical and eventually a platinum mirror formed on the walls of the reaction vessel.

Example 3

Reaction of $(\text{phenazine})PtCl_2(C_2H_4)$ with triphenylsilane

A mixture of 0.47 g of the platinum compound, 0.27 g triphenylsilane, and 25 ml. chloroform (freshly distilled from $CaSO_4$) was stirred under nitrogen for 15 min. then allowed to stand for 3 hr. The fine black microcrystals, 0.23 g, were collected on a frit, washed with fresh solvent, vacuum dried and stored under nitrogen. Spectroscopic and elemental analyses confirmed the identity of $[H(PNZ)PtCl_2(C_2H_4)]_3PtCl_3$.

Other silanes found capable of reducing $(PNZ)PtCl_2(C_2H_4)$ were 1,1,2-trimethyldisilane, 1,1,1-trimethyldisilane, diethoxysilane, phenylsilane, diethylsilane, octylsilane, pentamethyldisiloxane, and diphenylsilane.

Example 4

Hydrosilation Reactions

A. Hydrozilation of 1-methylcyclohexane using a Pt-N complex catalyst

A mixture of 20 ml trichlorosailane, 25 ml chloroform, 8.1 g 1-methylcyclohexane and 0.055 g $(\text{phenazine})PtCl_2(C_2H_4)$ was refluxed and stirred under nitrogen for 6 days. Distillation of the reaction mixture afforded 2.2 g of trichlorosilylmethylcyclohexane $C_6H_{11}CH_2SiCl_3$ which was characterized by its mass and NMR spectra.

B. Addition curing by hydrosilation using platinum-nitrogen complex catalysts

At the concentration shown below in TABLE III, several platinum catalysts were dispersed in an oligomer fluid of average composition A.

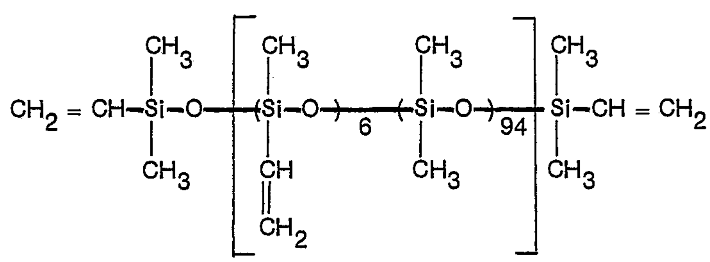

A

A crosslinking agent of oligomer composition B

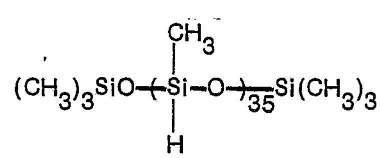

B

was added at 5 wt% of the total composition. The temperature at which gelation (formation of a rigid polymer) occurred in less than 5 sec. (i.e., the activation temperature) was determined on a "Kofler Heizbank" hot bar (Reichert, Austria). Hydrosilation caused crosslinking of the oligomers with a drastic increase in viscosity; a very active catalyst yielded a rigid polymer in all cases. The results are shown below in TABLE III and indicate that $(\text{phenazine})PtCl_2(C_2H_4)$ provides lower activation temperatures and longer gel times at ambient temperatures than the controls, complex catalysts $(\text{pyridine})PtCl_2(C_2H_4)$ and

$PtCl_2[S(C_2H_5)_2]_2$. This is particularly apparent in the cases when the catalysts are used at low concentrations. Low concentrations of platinum are desirable due to the high cost of this chemical element.

TABLE III

| Catalyst | Pt conc., ppm* | Activation temp.,**°C | Gel time, *** hours at 27°C |
|---|---|---|---|
| (phenazine)$PtCl_2(C_2H_4)$ | 100 | 100 | 0.5 |
| | 50 | 110 | 3 |
| | 10 | 120 | 10 |
| (pyridine)$PtCl_2(C_2H_4)$ | 100 | 110 | 0.2 |
| (control) | 50 | 130 | 3 |
| | 10 | 150 | 4 |
| $PtCl_2[S(C_2H_5)_2]_2$ | 100 | 110 | 0.1 |
| (control) | 50 | 120 | 0.5 |
| | 10 | 130 | 2 |

* relative to weight of A
** temperature at which gelation occurs in less than 5 sec
*** time required to form a rigid polymer at 27°C using ASTM method D—2471—71, reapproved 1979

The above data also show that (phenazine)$PtCl_2(C_2H_4)$ oligomer mixture was more stable in that it had a pot life 2—1/2 times longer than that of the controls but had an activation temperature 30°C lower than (pyridine)$PtCl_2(C_2H_4)$ at 10 ppm Pt concentration. Lower activation temperature is particularly advantageous when is it desired to carry out the curing process on a thermally labile substrate.

Using the same general method just described, the following complexes were found to exhibit similar catalytic activity in the curing of oligomers A and B:

TABLE IV

| Complex |
|---|
| (phenazine)$PtCl_2(C_2H_4)\cdot AgSO_3CF_3$ |
| (phenazine)$PtCl_2$(styrene) |
| (phenazine)$PtCl_2(C_2H_4)\cdot HCl$ |
| (phenazine)$PtCl_2S(C_2H_5)_2$ |
| (quinoxaline)$PtCl_2(C_2H_4)$ |
| (pyrazine)$PtCl_2(C_2H_4)$ |
| (phenazine)$PtCl_2P(C_6H_5)_3$ |
| (phenazine N-oxide)$PtCl_2(C_2H_4)$ |
| H[(phenazine)$PtCl_2(C_2H_4)]_2$ |
| $[(C_4H_9)_4N]$[(phenazine)$PtCl_2(C_2H_4)]_2$ |
| [H(phenazine)$PtCl_2(C_2H_4)]_3PtCl_3$ |
| H[(phenazine)$PtCl_2(C_2H_4)]_2$ and |
| [H(PNZ)$PtCl_2(C_2H_4)]_3PtCl_3$, |

prepared in EXAMPLE 3, were also found to have activity (at 100 ppm Pt) as hydrosilation catalysts. A concentration of 100 ppm Pt of the complex to be tested was added to oligomers A and B and the mixture stirred. Hydrosilation caused crosslinking of the oligomers with a drastic increase in viscosity.

C. Shaped article

The polymer produced in B. above, using (phenazine)$PtCl_2$(ethylene) as the catalyst, was poured into a heated mole (110°C) shaped as a gasket. A solid, rubbery gasket was extracted from the mold after 15 min.

D. Use of rhodium-nitrogen complexes as catalysts in hydrosilation reactions

Utility of several rhodium complexes as hydrosilation catalysts was evaluated using two vinyl functional siloxane polymers, C and D, described below in TABLES V and VI. A solution was prepared by adding the rhodium compound in 2 ml. dichloromethane to the vinyl functional siloxane and evaporating the dichloromethane. Typical rhodium concentrations were 25—50 ppm metal by weight. DC—1107 (polyhydrosiloxane crosslinker, $(CH_3)_3Si[CH_3Si(H)O]_{35}Si(CH_3)_3$, Dow Corning Co.), 0.5 ml., was added to 10 ml. of the catalyst-containing vinylsiloxane, and the gel times (i.e., the time it takes for crosslinking to a rubbery state to occur as determined by ASTM method D—2471-71, reapproved 1979) were measured. The more efficient the catalyst, the more rapid is the crosslinking hydrosilation reacton and, therefore, the shorter is the gel time. For comparison, certain runs were made with controls using compounds known in the prior art, i.e., $[(COD)RhCl]_2$ and (pyridine)RhCl(COD).

TABLE V

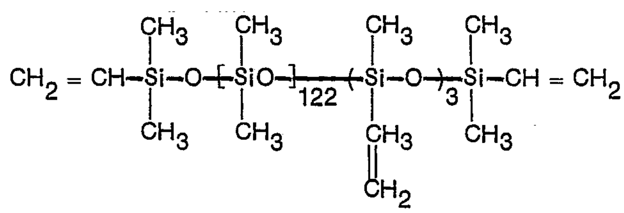

C

| Run | Catalyst (used with polymer C and DC—1107) | Rh, ppm | Gel time, room temp., min. | Gel time, 90°C, sec. | Temp. for gel time of 5 sec, °C or less |
|---|---|---|---|---|---|
| 1. | (phenazine)RhBr(COD) | 25 | >250 | 30 | 120 |
| 2. | (phanzine)RhCl$(CO)_2$ | 25 | 120 | 13 | 105 |
| 3. | $[(COD)RhCl]_2$* | 50 | 51 | 17 | 110 |
| 4. | (pyridine)RhCl(COD)* | 25 | 130 | 23 | 115 |

* control

Run 2 had a room temperature gel time comparable to other compositions tested, but its gel time at 90°C was very rapid, indicating it was an effective catalyst at elevated temperatures.

Run 1 has an unusually long gel time at room temperature, this indicating that (phenazine)RhBr(COD) was useful for operations requiring a long pot life. (Phenazine)RhBr(COD) was an effective catalyst at 120°C.

TABLE VI

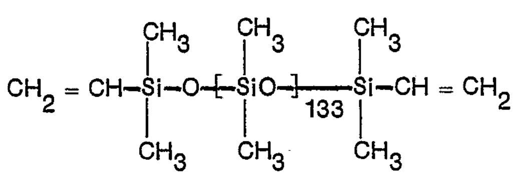

D

| Run | Catalyst (used with polymer D and DC—117) | Rh, ppm | Gel time, room temp., min. | Gel time, 90°C, sec. | Temp. for gel time of 5 sec, °C or less |
|---|---|---|---|---|---|
| 5. | (phenazine)RhCl(COD) | 25 | 83 | 12 | 105 |
| 6. | (pyridine)RhCl(COD)* | 25 | 80 | 13 | 110 |
| 7. | (phenazine)RhCl$(CO)_2$ | 25 | 160 | 10 | 105 |
| 8. | $[(COD)RhCl]_2$* | 50 | 30 | 10 | 100 |

* control

Run 7 was very stable at room temperature yet could be activated at a relatively low temperature of 105°C.

The composition of Run 7 was poured into a heated (110°C) mold which was shaped as a gasket. A solid rubbery gasket was extracted from the mold after 15 min indicating that the hydrosilation reaction produced a useful product.

E. Use of (pyrazine)[$RhCl(CO)_2$]$_2$ as catalyst in hydrosilation reactions.

A mixture was prepared by adding the rhodium complex compound (pyrazine)[$RhCl(CO)_2$]$_2$, prepared by the method disclosed in the reference to this complex under the section entitled Background Art above, and 2 ml. dichloromethane to the vinyl functional siloxane represented by polymer C, described above, and evaporating the dichloromethane. The rhodium concentration was 50 ppm metal by weight. DC—1107, (polyhydrosiloxane crosslinker, $(CH_3)_3Si[CH_3Si(H)O]_{35}Si(CH_3)_3$, Dow Corning Co.) 0.5 ml., was added to 10 ml. of the catalyst-containing vinyl-siloxane. The composition was poured into a heated (110°C) mold which was shaped as a gasket. a solid rubbery gasket was extracted from the mold after 15 min indicating that the hydrosilation reaction produced a useful product.

## Claims

1. Platinum-, rhodium-, and iridium-nitrogen complex compounds selected from classes of complexes having the general formulae:
(a) monometallic complexes: $(L)PtX_2(Y)$, $(L)RhX(W)_2$, and $(L)IrX(W)_2$,
(b) bimetallic complexes: $(L)(PtX_2)_2(Y)_2$ and $(PNZ)[RhCl(CO)_2]_2$,
(c) ionic complexes, $(L)PtX_2(Y)(Z)$, and
(d) reduced forms of monometallic complexes having the formulae:
(1) $H[(PNZ)PtX_2(Q)]_2$,
(2) $[(PNZ)PtX_2(Q)]_2$—, and
(3) $[H(PNZ)PtCl_2(C_2H_4)]_3PtCl_3$
wherein
L is a single ring or fused 2-, 3-, or 4-ring heterocyclic ligand comprising at least one 5- or 6-member ring, said ligand having only 2 to 4 nitrogen ring atoms. in the same ring, at least one of which nitrogen atoms is bonded to a platinum, rhodium, or iridium atom, with the proviso that when two nitrogen atoms are in the same 6-member ring, each nitrogen atom is bonded to two ring carbon atoms or phenazine N-oxide,
Y is an uncharged monodentate ligand that fills only one coordination position of the platinum atom and is selected from (1) olefins, which are unsubstituted or substituted by aryl groups, (2) triphenylphosphines or triphenylarsines, (3) diethyl sulfide, and (4) carbon monoxide, the ligand having up to 25 carbon atoms.
W is an uncharged ligand that fills one or two coordination positions of the metal atom, and is selected from a mono- or di-olefin or aryl substituted mono- or di-olefin, having up to 25 carbon atoms, and CO, and
X is independently Cl, Br, I, CN, or SCN,
Z is HCl, HBr, or silver trifluoromethanesulfonate,
Q is an olefin ligand of 2 to 25 carbon atoms, and
PNZ is phenazine.

2. The complex compounds according to Claim 1 selected from (phenazine) $PtCl_2(C_2H_4)$, (imidazole)$PtCl_2(C_2H_4)$, (phenazine) $PtCl_2(C_3H_6)$, (imidazole)$PtCl_2(C_3H_6)$, (pyrazine)$PtCl_2(C_2H_4)$, [2,3,5,6-$(CH_3)_4$pyrazine[$PtCl_2(C_2H_4)$, (phenazine)$RhCl(CO)_2$, (phenazine)$RhCl(C_8H_{12})$, (imidazole)$RhCl(CO)_2$, (quinoxaline)$RhCl(C_8H_{12})$, (phenazine)$IrCl(C_8H_{12})$, phenazine)$IrCl(CO)_2$, and (phenazine N-oxide)$RhCl(CO)_2$.

3. A process for hydrosilation comprising reacting a silicon-containing compound having at least one silicon-hydrogen bond and a compound having at least one pair of aliphatic unsaturated carbon atoms linked by multiple bonds in the presence of a catalytically effective amount of a rhodium- or iridium-nitrogen complex catalyst, optionally heating the resulting mixture, and recovering the resulting product, said process characterized in that the said catalyst is selected from the classes of complex compounds according to Claims 1 and 2.

4. The process according to Claim 3 wherein:
Y represents triphenylphosphine, triphenylarsine, CO, or $(C_2H_5)_2S$, and
L contains only two nitrogen atoms.

5. A process for hydrosilation comprising:
mixing an addition curable organosilicone composition with a catalytically effective amount of a platinum-, rhodium-, or iridium-nitrogen complex catalyst, optionally heating the resulting mixture and recovering the resulting product, said process being characterised in that the said catalyst is a catalyst selected from the classes of complexes according to Claims 1 and 2.

6. The process according to Claim 5 wherein said addition curable composition comprises:
a. an organosilicone compound having more than one silicon-hydrogen bond,
b. an organic compound having more than one pair of aliphatic carbon atoms linked by multiple bonds, and
c. a catalytic amount of at least one complex compound selected from the complex compounds according to Claims 1 and 2.

7. The composition according to Claim 6 wherein said organic compound is a polysiloxane having more than one pair of aliphatic carbon atoms linked by multiple bonds.

8. An addition cured composition comprising the reaction product of:
a. an organosilicone compound having more than one silicon-hydrogen bond,
b. an organic compound having more than one pair of aliphatic carbon atoms linked by multiple bonds, and
c. a catalytic amount of at least one complex compound according to Claims 1 and 2.

9. The addition cured coposition according to Claim 8 wherein said organosilicone compound is a polysiloxane having more than one pair of aliphatic carbon atoms linked by multiple bonds.

10. The process according to Claim 4 wherein L is quinoxaline or phenazine.

**Patentansprüche**

1. Platin-, Rhodium- und Iridium-Stickstoff-Komplexverbindungen, die aus den Klassen der Komplexverbindungen mit folgenden allgemeinen Formeln ausgewählt sind:
(a) Monometallische Komplexverbindungen: $(L)PtX_2(Y)$, $(L)RhX(W)_2$ und $(L)IrX(W)_2$;
(b) bimetallische Komplexverbindungen: $(L)\ (PtX_2)_2(Y)_2$ und $(PNZ)\ [RhCl(CO)_2]_2$;
(c) ionische Komplexverbindungen: $(L)PtX_2(Y)(Z)$; und
(d) reduzierte Formen von monometallischen Komplexverbindungen mit den Formeln:
(1) $H[(PNZ)PtX_2(Q)]_2$;
(2) $[(PNZ)PtX_2(Q)_2$; und
(3)$[H(PNZ)PTCl_2(C_2H_4)]_3PtCl_3$
wobei
L eine einzelner Ring oder ein heterozyklischer Ligand mit 2, 3 oder 4 verschmolzenen Ringen ist, der mindestens einen 5- oder 6-gliedrigen Ring und in ein und demselben Ring nur 2 bis 4 Ringstickstoffatome besitzt, von denen mindestens eines mit einem Platin-, Rhodium oder Iridiumatom verbunden ist, wobei von zwei in demselben 6-gliedrigen Ring enthaltenen Stickstoffatomen jedes mit zwei Ringkohlenstoffatomen oder mit, oder Phenazin-N-Oxid,
Y ein nichtgelander einzähniger Ligand ist, der nur einen Koordinationsplatz des Platinatoms besetzt und der ausgewählt ist aus (1) unsubstituierten oder mit Arylgruppen substituierten Olefinen, (2) Triphenylphosphin oder Triphenylarsin, (3) Diethylsulfid und (4) Kohlenmonoxid, wobei der Ligand bis zu 25 Kohlenstoffatome besitzt;
W ein ungeladener Ligand ist, der einen oder zwei Koordinationsplätze des Metallatoms besetzt und aus den Mono- und Diolefinen und den arylsubstituierten Mono- und Diolefinen mit bis zu 25 Kohlenstoffatomen, und dem CO ausgewählt ist,
X jeweils Cl, Br, I, CN oder SCN ist,
Z HCl, HBr oder Silbertrifluormethansulfonat ist,
Q ein Olefinligand mit 2 bis 25 Kohlenstoffatomen und
PNZ Phenazin ist.

2. Komplexverbindungen nach Anspruch 1, die ausgewählt sind aus Phenazin-$PtCl_2(C_2H_4)$, Imidazol-$PtCl_2(C_2H_4)$, 2,3,5,6-$(CH_3)_4$-Pyrazin-$PtCl_2(C_2H_4)$, Phenazin-$RhCl(CO)_2$, Phenazin-$RcCl(C_8H_{12})$, Imidazol-$RhCl(CO)_2$, Chinoxalin-$RHCl(C_8H_{12})$, Phenazin-$IrCl(C_8H_{12})$, Phenazin-$IrCl(CO)_2$ und (Phenazin-N-oxid)-$RHCl(CO)_2$.

3. Hydrosilationsverfahren, in dem eine siliciumhaltige Verbindung, die mindestens eine Silicium-Wasserstoff-Bindung besitzt, und eine Verbindung mit mindestens einem Paar von miteinander durch mehrere Bindungen verbundenen, ungesättigten aliphatischen Kohlenstoffatomen, die in Gegenwart einer katalytisch wirksamen Menge einer Rhodium- oder Iridium-Stickstoff-Komplexverbindung umgesetzt werden, das dabei erhaltene Gemisch gegebenenfalls erhitzt wird und das erhaltene Produkt abgetrennt wird, dadurch gekennzeichnet, daß der genannte Katalysator aus den Klassen der Komplexverbindungen nach Anspruch 1 und 2 ausgewählt ist.

4. Verfahren nach Anspuch 3, dadurch gekennzeichnet, daß
Y Triphenylphosphin, Triphenylarsin, CO oder $(C_2H_5)_2S$ bedeutet und
L nur zwei Stickstoffatome enthält.

5. Hydrosilationsverfahren, in dem eine additionshärtbare Organosiliconverbindung mit einer katalytisch wirksamen Menge eines aus Platin-, Rhodium- oder Iridium-Stickstoff-Verbindung bestehenden Katalysators gemischt wird, das so erhaltene Gemisch gegebenenfalls erhitzt wird und das erhaltene Produkt abgetrennt wird, dadurch gekennzeichnet, daß der Katalysator ein aus den Klassen der Komplexverbindungen nach Anspruch 1 und 2 ausgewählter Katalysator ist.

6. Verfahren nach Anspruch 5, dadurch gekennzeichnet, daß die additionshärtbare Zusammensetzung
a. eine Organosiliconverbindung mit mehr als einer Silicium-Wasserstoff-Bindung,
b. eine organische Verbindung mit mehr als einem Paar von durch mehrere Bindungen miteinander verbundenen aliphatischen Kohlenstoffatomen und
c. eine katalytisch wirksame Menge mindestens einer Komplexverbindung enthält, die und aus den Komplexverbindungen nach Anspruch 1 und 2 ausgewählt ist.

7. Zusammensetzung nach Anspruch 1, dadurch gekennzeichnet, daß die organische Verbindung ein

Polysiloxan mit mehr als einem Paar von durch mehrere Bindungen miteinander verbundenen, aliphatischen Kohlenstoffatomen ist.

8. Additionsgehärtete Zusammensetzung, die das Reaktionsprodukt

a. einer Organosiliconverbindung mit mehr als einer Silicium-Wasserstoff-Bindung,

b. einer organische Verbindung mit mehr als einem Paar von durch mehrere Bindungen miteinander verbundenen, aliphatischen Kohlenstoffatomen und

c. eine katalytisch wirksame Menge mindestens einer Komplexverbindung nach Anspruch 1 und 2 ist.

9. Additionsgehärtete Zusammensetzung nach Anspruch 8, dadurch gekennzeichnet, daß die Organosiliconverbindung ein Polysiloxan mit mehr als einem Paar von durch mehrere Bindungen miteinander verbundenen, aliphatischen Kohlenstoffatomen ist.

10. Verfahren nach Anspruch 4, dadurch gekennzeichnet, daß L Chinoxalin oder Phenazin ist.

**Revendications**

1. Composés complexes de platine-, rhodium- et iridium-azote, caractérisé en ce qu'ils sont choisis parmi les classes de complexes de formules générales suivantes:

(a) complexes monométalliques: $(L)PtX_2(Y)$, $(L)RhX(W)_2$, et $(L)IrX(W)_2$,

(b) complexes bimétalliques: $(L)(PtX_2)_2(Y)_2$ et $(PNZ)[RhCl(CO)_2]_2$,

(c) complexes ioniques: $(L)PtX_2(Y)$ (Z), et

(d) formes réduites de complexes monométalliques ayant les formules:

(1) $H[(PNZ)PtX_2(Q)]_2$,

(2) $[(PNZ)PtX_2(Q)]_2$, et

(3) $[H(PNZ)PtCl_2(C_2H_4)]_3PtCl_3$

dand lesquelles

L est un ligand hétérocyclique à un seul noyau, ou à 2-, 3- ou 4- noyaux condensés comprenant au moins un noyau à 5 ou 6 commets, ledit ligand ne contenant que 2 à 4 atomes d'azote cyclique dans le même noyau, au moins un de ces atomes d'azote est relié à un atome de platine, rhodium ou iridium, sous réserve que lorsque deux atomes d'azote sont dans le même noyau à 6 sommets, chauqe atome d'azote est relié à deux atomes de carbone cycliques, ou la phénazine-N-oxyde,

Y est un ligand monodenté non chargé qui n'occupe qu'une seule position de coordination de l'atome de platine et qui est choisi parmi (1) les oléfines non substituées, ou substituées par des groupes aryle, (2) la triphénylphosphine ou la triphénylarsine, (3) le diéthylsulfure, et (4) l'oxyde de carbone, le ligand contentant jusqu'à 25 atomes de carbone,

W est un ligand non chargé qui occupe une ou deux positions de coordination de l'atome métallique et qui est choisi parmi les mono- et dioléfines ou les mono- ou dioléfines aryl-substituées, l'oléfine contenant jusqu'à 25 atomes de carbone, et, CO,

X est indépendamment Cl, Br, I, CN ou SCN,

Z est HCl, HBr, ou le trifluoeométhanesulfonate d'argent,

Q est un ligand d'oléfine de 2 à 25 atomes de carbone, et

PNZ est la phénazine.

2. Composés complexes selon la revendication 1, caractérisés en ce qu'ils sont choisis parmi les (phénazine)$PtCl_2(C_2H_4)$, (imidazole)$PtCl_2(C_2H_4)$, (phénazine)$PtCl_2(C_3H_6)$, (imidazole)$PtCl_2(C_3H_6)$, (pyrazine)$PtCl_2(C_2H_4)$, $[2,3,5,6-(CH_3)_4pyrazine]PtCl_2-(C_2H_4)$, (phénazine)$RhCl(CO)_2$, (phénazine)$RhCl(C_8H_{12})$, (imidazole)$RhCl(CO)_2$, (quinoxaline)$RhCl(C_8H_{12})$, (phénazine)$IrCl(C_8H_{12})$, (phénazine)$IrCl(CO)_2$, et (phénazine N-oxyde)$RhCl(CO)_2$.

3. Procédé d'hydrosilation selon lequel on fait réagir un composé silicié, comportant au moins une liaison silicium-hydrogène et un composé comportant au moins une paire d'atomes de carbone aliphatiques non saturés reliés par des liaisons multiples, en présence d'une quantité catalytiquement efficace d'un catalyseur complexe de rhodium- on iridium-azote, le cas échéant, on chauffe le mélange résultant et, on récupère le produit obtenu, ledit procédé étant caractérisé en ce que ledit catalyseur est choisi parmi les composés complexes selon les revendications 1 et 2.

4. Procédé selon la revendication 3, caractérisé en ce que Y représente la triphénylphosphine, la triphénylarsine, CO, ou $(C_2H_5)_2S$ et L contient seulement deux atomes d'azote.

5. Procédé d'hydrosilation selon lequel on mélange une composition polymérisable par addition d'organosilicone avec une quantité catalytiquement efficace d'un catalyseur complexe de platine-, rhodium- ou iridium-azote, en chauffant le cas échéant le mélange résultant, et on récupère le produit obtenu, ledit procédé étant caractérisé en ce que ledit catalyseur est choisi parmi les complexes selon les revendications 1 et 2.

6. Procédé selon la revendication 5, caractérisé en ce que ladite composition polymérisable par addition comprend:

a. un composé d'organosilicone ayant plus d'une liaison silicium-hydrogène,

b. un composé organique ayant plus d'une paire d'atomes de carbone aliphatiques reliés par des liaisons multiples, et

c. une quantité catalytique d'au moins un composé complexe choisi parmi les composés complexes selon les revendications 1 et 2.

7. Composition selon la revendication 6, caractérisé en ce que ledit composé organique est un polysiloxane ayant plus d'une paire d'atomes de carbone aliphatiques reliés par des liaisons multiples.

8. Composition polymérisable par addition, caractérisée en ce qu'elle comprend le produit de réaction de:

a. un composé d'organosilicone ayant plus d'une liaison silicium-hydrogène,

b. un composé organique ayant plus d'une paire d'atomes de carbone aliphatiques reliés par des liaisons multiples, et

c. une quantité catalytique d'au moins un composé complexe selon les revendications 1 et 2.

9. Composition polymérisable par addition, seln la revendication 8, caractérisée en ce que ledit composé d'organosilicone est un polysiloxane ayant plus d'une paire d'atomes de carbone aliphatiques reliés par des liaisons multiples.

10. Procédé selon la revendication 4, caractérisé en ce que L est la quinoxaline ou la phénazine.